# EUROPEAN PATENT SPECIFICATION

(11) **EP 2 666 817 B1**
(45) Date of publication and mention of the grant of the patent: **21.02.2018**
(21) Application number: 12004042.3
(22) Date of filing: 24.05.2012
(51) Int. Cl.: C08L 23/10

(54) **SOFT HETEROPHASIC POLYOLEFIN COMPOSITION HAVING LOW C6 EXTRACTABLES**
WEICHE HETEROPHASISCHE POLYOLEFINZUSAMMENSETZUNG MIT NIEDRIGEM C6-ENTNAHMEVOLUMEN
COMPOSITION DE POLYOLÉFINE HÉTÉROPHASIQUE MOLLE DOTÉE D'EXTRACTIBLES C6 FAIBLES

(43) Date of publication of application: 27.11.2013
(73) Proprietor: Borealis AG, 1220 Vienna (AT)
(72) Inventor: Klimke, Katja, Abu Dhabi (AE); Bernreitner, Klaus, 4010 Linz (AT)
(74) Representative: Kador & Partner

(56) References cited:
- WO-A1-98/54251
- WO-A1-2009/129873
- WO-A1-2011/061087

## Description

The present invention relates to a heterophasic polyolefin composition comprising a matrix comprising a propylene homo- and/or copolymer and an alpha-olefin copolymer rubber dispersed in the matrix forming the rubber phase. The present invention further relates to a process for the preparation of such a heterophasic polyolefin composition, articles made therefrom and uses of the heterophasic polyolefin composition.

There is an increasing demand for soft heterophasic compositions. In the past heterophasic compositions have been prepared by mechanically blending the matrix component and the rubber component. However, mechanically mixing the two components leading to the compositions having two phases results in limitations as to the size of the rubber particles and leads to disadvantages in processing such as increased extrusion time and increased energy consumption therefor. Nowadays in-situ blending by production in at least two reactors coupled in series is the usual technique. However, this method also has constrains as soft heterophasic compositions become relatively sticky whereby the withdrawal from the reactor can be problematic or even impossible. As a loophole the degradation of heterophasic compositions with peroxides, also called visbreaking or controlled rheology (CR) is often used. However, visbreaking or controlled rheology generally result in a significant increased C6-solubles for a given melt flow rate when compared with untreated heterophasic material resulting from direct in-situ blending, i.e. without visbreaking or controlled rheology treatment.

US 5,705,568 reports the use of a wide variety of peroxides such as di-tert-butyl peroxide, benzoyl peroxide, lauryl peroxide, cyclohexanone peroxide, tert-butyl-peroxy-isopropyl carbonate, 2,5-dimethyl-2,5-bis(tert-butylperoxy)-hex-3-ine, 1,1,4,4,7,7-hexamethyl-cyclo-4,7-diperoxynonane, 1,3-bis-(tert-butylperoxy-isopropyl)-benzene, 3,3,6,6,9,9-hexamethylcyclo-1,2,4,5-tetraoxanonane, 2,5-dimethyl-2,5-bis-(tert-butylperoxy)-hexane and phthalide peroxides, preferentially di-tert-butyl peroxide and bis(2(1,1-dimethylethyl)peroxyisopropyl)benzene for increasing the melt flow rate of polypropylenes and elastomeric polypropylene homopolymers (ELPP).

For certain applications such as for the replacement of PVC derived materials, heterophasic polypropylene compositions are required to be soft such as reflected by a low flexural modulus of 450 MPa or lower. Moreover, it is generally desirable to have high flowability, low amount of extractables, good optical properties as well as absence of taste and odor.

This balance of properties is difficult to achieve since a higher flowability reflected by a higher melt flow rate is usually accompanied by higher amount of C6 extractables.

EP 1 607 440 A1 relates to modified polypropylene compositions having a melt flow rate of below 8 g/10min and high stiffness in the range of above 1200 MPa for automobile exterior applications comprising a heterophasic propylene copolymer, a further elastomeric copolymer and an inorganic filler. The compositions are with various organic peroxides such as dibenzoyl peroxide, tert-butyl peroxy-2-ethylhexanoate, tert-amyl peroxy-2-ethylhexanoate, tert-butyl peroxydiethylacetate, 1,4-di(tert-butylperoxycarbo)cyclohexane, tert-butyl peroxyisobutyrate, 1,1-di(tert-butylperoxy)-3,3,5-trimethyl-cyclohexane, methyl isobutyl ketone peroxide, 2,2-di(4,4-di(tert-butylperoxy)cyclohexyl)propane, 1,1-di(tert-butylperoxy)cyclohexane, tert-butyl peroxy-3,5,5-trimethylhexanoate, tert-amylperoxy 2-ethylhexyl carbonate, 2,2-di(tert-butylperoxy)butane, tert-butylperoxy isopropyl carbonate, tert-butylperoxy 2-ethylhexyl carbonate, tert-butyl peroxyacetate, tert-butyl peroxybenzoate, Di-tert-amyl peroxide.

EP 1 391 482 A1 similarly discloses the treatment of stiff heterophasic propylene polymer composition having an MFR > 10g/10 min by various peroxides.

Soft polypropylene compositions including three components, namely a polypropylene, an elastomeric copolymer of ethylene and at least one alpha-olefin comonomer and an ethylene C2 to C8 alkyl acrylate copolymer and being chemically modified by bifunctionally unsaturated monomers or multifunctionally unsaturated low molecular weight polymers are known from EP2048185. However, the presence of acrylates in the composition and the use of bifunctionally unsaturated monomers such as butadiene limit the use and is frequently not acceptable.

WO-A-9854251 is concerned with a thermoplastic and elastomeric polyolefin mixture being subjected to a peroxide treatment resulting in visbreaking.

Thus, the challenge is to obtain a soft composition having low amounts of C6 extractables without adding softeners or other agents. It is further desirable to obtain a soft composition being suitable for injection molding, blown film extrusion, cast film extrusion and injection stretch blow molding.

### Description

The present invention is based on the finding that the above object can be achieved by providing an unmodified heterophasic polypropylene composition having an MFR (2.16 kg, 230 °C) of up to 1.5 g/10min and melt mixing the unmodified heterophasic polypropylene composition with a peroxide having a one hour half life time temperature of 100 to 125 °C.

The present invention insofar provides a
heterophasic polypropylene composition according to claim 1.

The present invention further provides a
heterophasic polypropylene composition according to claim 1, obtainable by
a) providing an unmodified heterophasic polypropylene composition having an MFR (2.16 kg, 230 °C) of 0.1 to below 1.5 g/10min, determined according to ISO 1133, including a propylene random copolymer matrix phase (A), and an ethylene-propylene copolymer rubber phase (B) dispersed within the matrix phase
b) melt mixing the unmodified heterophasic polypropylene composition with a peroxide having a one hour half life time temperature of 100 to 125 °C in an amount of 0.1 to 0.8 wt.-% with respect to the total composition.

### Definitions

Heterophasic polypropylene composition as used herein denotes "heterophasic polyolefin composition" comprising more than 60 wt.-% molecular units derived from propylene.

The term "heterophasic polypropylene composition" denotes compositions consisting of an olefin polymer matrix resin and an elastomeric olefin polymer dispersed in said matrix resin.

The heterophasic polypropylene composition according to the present invention has a fraction soluble in p-xylene at 23 °C (XCS fraction), and a fraction insoluble in p-xylene at 23 °C (XCU fraction). The fraction soluble in p-xylene at 23 °C (XCS fraction) denotes the soluble fraction in the test according to ISO 6427 at 23 °C. The p-xylene cold soluble fraction (XCS) of the tested polymer compositions was determined according to ISO 6427 at 23 °C.The fraction insoluble in p-xylene at 23°C (XCU) is equal to 100% - XCS%.

The term "unmodified heterophasic polyproyplene composition" or "intermediate heterophasic polyproyplene composition" signifies a heterophasic polyolefin composition which is obtained by a polymerization reaction and has not been subjected to a post-reactor processing step selected from the group of visbreaking, controlled rheology treatment, treatment with a radical forming agent in the presence of at least one diene.

"Melt mixing" means subjecting the optionally premixed mixture to a melt mixing device.

"Catalyst" denotes the organometallic compound containing the reaction centre of the polymerisation.

"Catalyst system" denotes the mixture of the catalyst, the optional cocatalyst and the optional support.

"Visbreaking" denotes subjecting a polymer resin to peroxide treatments in the absence of a bifunctionally unsaturated molecule such as a diene.

In the present invention, the term "matrix" is to be interpreted in its commonly accepted meaning, i.e. it refers to a continuous phase (in the present invention a continuous polymer phase) in which isolated or discrete particles such as rubber particles are dispersed.

As used in the present invention, the term rubber corresponds to the commonly accepted meaning and refers to an elastomeric polymeric material. The rubber naturally is of high amorphous nature and therefore mainly forms the XCS fraction.

In the sense of the present invention "masterbatch" means a concentrated premix of a propylene polymer with a free radical forming agent such as a peroxide.

Comonomer content denotes the amount of comonomer units derived from monomers other than propylene.

### Heterophasic polypropylene composition

The heterophasic polypropylene composition according to the present invention preferably has an MFR (2.16 kg, 230 °C) of at least 3.0, more preferably 3.5 g/10min when determined according to ISO 1133.

The heterophasic polypropylene composition according to the present invention has an MFR (2.16 kg, 230 °C) of up to 7.0, preferably up to 6.0 g/10min, more preferably up to 5.5 and most preferably 4.5 g/10min when determined according to ISO 1133.

The total comonomer content of the heterophasic polyolefin composition according to the present invention, being the sum of ethylene and non-ethylene units (such as C₄-C₁₂ alpha-olefin) present in said composition, is not more than 30 wt.%, preferably in the range of 10 to 30 wt.%, more preferably 12 to 28 wt.% and most preferably in the range of 15 to 25 wt.%.

The heterophasic polypropylen composition according to the present invention preferably has a melting temperature Tm in the range of 135 to 170 °C, more preferably from 140 to 167 °C and most preferably from 150 to 165 °C. High melting temperatures enable the provision of materials capable of withstanding steam sterilization. Higher melting temperatures can be achieved with polypropylene homopolymers and higher crystallinity.

Modifiers and additives may be added to the polypropylene composition as occasion demands. Preferably, the modifiers are selected from poly-1-butene and poly-4-methylpentene-1. Suitable additives include stabilizers, lubricants, pigments and foaming agents. These modifiers and/or additives may be included during the polymerisation process or after the polymerisation by melt mixing. It is however preferred that the modifiers do not negatively affect the desirable properties of the composition as discussed above. The amount of stabilizers and additives is preferably limited to 5 wt.-% with respect to the total heterophasic composition.

The heterophasic polypropylene composition according to the present invention has a hexane extractable fraction in an amount of not more than 30 wt.%, preferably not more than 27 wt.%, even more preferably not more than 25 wt.%. Details of the measurement method of the hexane extractable fraction are described in the example section.

The heterophasic polypropylene composition according to the present invention preferably has a flexural modulus of below 350 MPa, more preferably below 300 MPa, even more preferably below 250 MPa. Generally the flexural modulus will be higher than 80 MPa. Preferably the flexural modulus is higher than 120 MPa. The flexural modulus is determined according to ISO 178 at a test speed of 2mm/min and a force of 100N, whereby the length of the span between the supports was 64 mm, on test specimens having a dimension of 80x10x4.0 mm³ (length x width x thickness) prepared by injection moulding according to EN ISO 1873-2.

The heterophasic polypropylene composition according to the present invention is further preferably characterized by the ratio of the product of intrinsic viscosity of XCU in ml/g • hexane extractable fraction (wt.-%) to the melt flow rate MFR (2.16 kg, 230 °C) of below 1500 wt.-%•g/10min more preferably below 1200 wt.-%•g/10min, even more preferably below 1100 wt.-%•g/10min, yet even more preferably below 1000 wt.%•g/10min, yet even more preferably below 900 wt.%•g/10min and most preferably below 800 wt.-%•g/10min. Usually the value for (intrinsic viscosity of XCU in ml/g • hexane extractable fraction (wt.-%)) / MFR (2.16 kg, 230 °C) will be higher than 300 wt.-%•g/10min.

In a further aspect, heterophasic polypropylene composition according to the present invention is further preferably characterized by the product of intrinsic viscosity of XCS in ml/g • hexane extractable fraction (wt.-%) of below 4700 (ml/g•wt.-%), more preferably below 4600 (ml/g•wt.-%), even more preferably below 4300 (ml/g•wt.-%) and most preferably below 4000 (ml/g•wt.-%). Usually the product (intrinsic viscosity of XCS in ml/g • hexane extractable fraction (wt.-%)) will be higher than 1000 wt.-%•g/10min.

The heterophasic polypropylene composition according to the present invention is further preferably characterized by the ratio of the hexane extractable fraction (wt.-%) to the melt flow rate MFR (2.16 kg, 230 °C) in the range of 2.0 to 7.0 (wt.-%/(g/10min)), further preferably below 6.5 (wt.-%/(g/10min)), even more preferably in the range of 2.0 to 6.5 (wt.-%/(g/10min)), and most preferably below 6.0 (wt.-%/(g/10min)).

### XCU fraction

Preferably at least 90 wt% of the XCU fraction, more preferably at least 95 wt%, even more preferably at least 97 wt% of the XCU fraction is a propylene copolymer.

Preferably the XCU fraction has an intrinsic viscosity determined according to DIN EN ISO 1628-1 and -3 of below 250 ml/g, more preferably below 225 ml/g, even more preferably below 210 ml/g and most preferably below 200 ml/g. Usually the intrinsic viscosity of the XCU fraction is higher than 100 ml/g determined according to DIN EN ISO 1628-1 and -3. Preferably XCS fraction has an intrinsic viscosity determined according to DIN EN ISO 1628-1 and -3 of higher than 125 ml/g.

The XCU fraction is essentially formed by a propylene copolymer. The propylene copolymer is present in such an amount that it can form a continuous phase which can act as a matrix. The matrix phase can be made of the propylene copolymer only but can also comprise additional polymers, in particular polymers which can be blended homogeneously with the propylene copolymer and together form a continuous phase which can act as a matrix.

Preferably the amounts of units derived from comonomers in the p-xylene cold insoluble fraction (XCU) are below 6.0 wt.-%, more preferably 4.0 wt.%, even more preferably below 3.5 wt.%. Usually the amount of derived from comonomers in the p-xylene cold insoluble fraction (XCU) are above 1.0 wt.%.

More particularly, the amount of units derived from comonomers selected from ethylene, and/or C₄ to C₁₂ alpha olefins in the fraction insoluble in xylene (XCU fraction) is 1.0 to 4.0 wt.-% and more preferably 1.5 to 3.5 wt.-% with respect to the total weight of the fraction being insoluble in p-xylene (XCU fraction).

The XCU fraction essentially originating from the matrix component may be produced by a single- or multistage process polymerisation of propylene or propylene with alpha-olefin and/or ethylene such as bulk polymerisation, gas phase polymerisation, solution polymerisation or combinations thereof using conventional catalysts. A homo- or copolymer can be made either in loop reactors or in a combination of loop and gas phase reactors. Those processes are well known to one skilled in the art. A preferred multistage process is a "loop-gas phase"-process, such as developed by Borealis A/S, Denmark (known as BORSTAR® technology) described e.g. in the patent literature, such as in EP 0 887 379 or in WO 92/12182.

The XCU fraction is preferably present in an amount of 30 to 70 wt.-%, more preferably 35 to 60 wt.-% and most preferably 40 to 55 wt.-% with respect to the total heterophasic polypropylene composition.

### XCS fraction

In addition to the XCU fraction as described above, the heterophasic polymer composition of the present invention comprises a XCS fraction essentially originating from an ethylene/alpha-olefin rubber.

The XCS fraction is preferably present in an amount of 30 to 70 wt.-%, more preferably 40 to 65 wt.-% and most preferably 45 to 60 wt.-% with respect to the total heterophasic polypropylene composition.

Preferably, the ethylene/ alpha-olefin rubber is an ethylene/propylene rubber, which may additionally comprise C₄-C₁₂ alpha-olefin monomer units.

It is preferred that, the p-xylene soluble fraction (XCS) has an amount of propylene-derived monomer units of 50 to 90 wt.%, preferably 60 to 85 wt.%, more preferably 65 to 80 wt.% with respect to the total XCS fraction.

The amount of co-monomer units of the p-xylene soluble fraction (XCS) being ethylene and/or C₄-C₁₂ alpha-olefin is 10 to 50 wt.%, preferably 15 to 40 wt.%, more preferably 20 to 35 wt.% with respect to the total XCS fraction.

Preferably, the p-xylene soluble fraction (XCS) comprises, preferably consists of an ethylene/propylene, ethylene/butane, ethylene/hexene, ethylene/octene copolymer, more preferably an ethylene/p-ropylene copolymer.

In principle, the p-xylene soluble fraction (XCS) may include one or more elastomeric ethylene/C₃-C₁₂ alpha-olefin copolymers.

Further preferably, the XCS fraction has an intrinsic viscosity determined according to DIN EN ISO 1628-1 and -3 of below 275 ml/g, more preferably below 250 ml/g, even more preferably below 225 ml/g and most preferably below 200 ml/g. Usually the intrinsic viscosity of the XCS fraction is higher than 100 ml/g determined according to DIN EN ISO 1628-1 and -3. Preferably XCS fraction has an intrinsic viscosity determined according to DIN EN ISO 1628-1 and -3 of higher than 125 ml/g.

According to the present invention the heterophasic polypropylene composition is further characterized by a ratio of the intrinsic viscosities determined according to DIN EN ISO 1628-1 and -3 of the XCU and the XCS fraction in the range of 0.75 to 0.90, preferably 0.80 to 0.90 and more preferably 0.80 to 0.90.

It is highly preferred that the heterophasic polypropylene composition according to the present invention is an in-situ blend.

As stated above the present invention is concerned with a heterophasic polypropylene composition having an MFR (2.16 kg, 230 °C) of at least 2.5 g/10min, determined according to ISO 1133, the heterophasic polypropylene composition further having a flexural modulus of below 450 MPa determined according to ISO 178 at a test speed of 2mm/min and a force of 100N (length of the span between the supports was 64 mm) on test specimens having a dimension of 80x10x4.0 mm³ (length x width x thickness) prepared by injection moulding according to EN ISO 1873-2, whereby the heterophasic polypropylene composition includes a propylene random copolymer matrix phase (A), and an ethylene-propylene copolymer rubber phase (B) dispersed within the matrix phase, obtainable by providing an unmodified heterophasic polypropylene composition having an MFR (2.16 kg, 230 °C) of up to 1.5 g/10min, determined according to ISO 1133, including a propylene random copolymer matrix phase (A), and an ethylene-propylene copolymer rubber phase (B) dispersed within the matrix phase, and subsequently melt mixing the unmodified heterophasic polypropylene composition with with a peroxide having a one hour half life time temperature of 100 to 125 °C in an amount of 0.1 to 0.8 wt.-% with respect to the total composition.

Peroxides which peroxide having a one hour half life time temperature of 100 to 125 °C are suitable. Preferably the one hour half life time temperature is in the range of 105 to 120 °C.

Without being want to be bound by theory, it is believed that a higher stability, i.e. longer lifetime of the intermediate radical results in higher degree of long chain branching.

The following organic peroxides are suitable for the above process: 1,1-di(tert-butylperoxy)-3,3,5-trimethylcyclohexane; tert-amylperoxy 2-ethylhexyl carbonate; 1,1-di(tert-butylperoxy)cyclohexane (50% solution in mineral oil); tert-butyl peroxy-3,5,5-trimethylhexanoate; 2,2-di(tert-butylperoxy)butane (50% solution in mineral oil); tert-butylperoxy isopropyl carbonate (75% solution in odorless mineral spirits); tert-butylperoxy 2-ethylhexyl carbonate; tert-butyl peroxyacetate (50% solution in odorless mineral spirits); tert-butyl peroxybenzoate;
and mixtures of these organic peroxides. Tert-butylperoxy isopropyl carbonate is particularly suitable.
The present invention is further concerned with a heterophasic polypropylene composition, wherein the peroxide is used in an amount of 0.1 to 0.8 wt.-%, preferably 0.1 to 0.6, more preferably 0.2 to 0.5 wt.-%. The amounts of peroxide refer to the amount of active precursor such as tert-butylperoxy isopropyl carbonate. The solvents such as mineral spirit do not contribute as to the amount of peroxide to be used.

In a further preferred aspect, the heterophasic polypropylene composition according to the present invention is preferably obtained by mixing the peroxide as a polypropylene masterbatch, more preferably a polypropylene masterbatch having a content of peroxide of 5 to 60 wt.-%, more preferably 20 to 50 wt.-%, most preferably 30 to 45 wt.-% with respect to the total polypropylene masterbatch.

The peroxide masterbatch composition is provided in a concentration from 0.10 to 3.0 wt.%, preferably 0.20 to 2.5 wt.%, even more preferably 0.30 to 1.5 wt.%, yet more preferably 0.40 to 1.2 wt.%, based on the total weight of the propylene polymer composition.

In a further preferred aspect, the heterophasic polypropylene composition according to the present invention is melt mixed at a barrel temperature of 180 to 300°C.

The ratio of the MFR₂(2.16 kg, 230 °C, ISO 1133) of the final heterophasic polypropylene composition to the MFR₂(2.16 kg, 230 °C, ISO 1133) of the unmodified heterophasic polypropylene composition preferably is in the range of 5 to 15, more preferably in the range of 5 to 10, most preferably 6 to 9.

According to the present invention it was found that using the above masterbatch compositions instead of adding a peroxide component in pure form to the polypropylene resin powder in one or more pre-mixing steps prior to the melt-mixing step as conventionally done, allows simplification of the process and enhances product properties. With the inventive masterbatch compositions any well-mixing extruder is useful and there is no need for specific sorption and/or dosing equipment as is required when adding the peroxide and diene component in pure form. Moreover, the evenness of the distribution is enhanced.

The unmodified intermediate heterophasic propylene composition may be pre-mixed with the peroxide masterbatch composition in a powder mixing device, like a horizontal mixer with paddle stirrer.

A preferred peroxide masterbatch composition may be TRIGONOX® BPIC 37.5PP-PD (supplier: Membrana GmbH, DE) which consists of 37.5 wt.% peroxide (tert-butylperoxy isopropyl carbonate), 12.5 wt.% isododecane and 50 wt.% porous polypropylene.

The intermediate heterophasic propylene composition together with the peroxide masterbatch composition may then be melt-mixed at a barrel temperature of 180 to 300 °C, preferably in a continuous melt mixing device like a single screw extruder, a co-rotating twin screw extruder or a co-kneader. Most preferably a Coperion ZSK 18 is used. It is further preferred to use an extruder screw recommended for talcum reinforced polypropylene.

The barrel temperature preferably is in the range of 180 to 300°C, more preferably 200 to 260 °C, even more preferably 210 to 240 and most preferably 215 to 235 °C.

More preferably a specific temperature profile is maintained along the screw of the melt-mixing device, having an initial temperature T1 in the feed zone, a maximum temperature T2 in the kneading zone and a final temperature T3 in the die zone, all temperatures being defined as barrel temperatures.

Barrel temperature T1 in the feed zone is preferably in the range of 180 to 200 °C. Barrel temperature T2 in the kneading zone preferably is in the range of 200 to 280 °C, more preferably 200 to 250 and even more preferably 210 to 240 °C, and most preferably 215 to 235 °C. Barrel temperature T3 in the die zone preferably is in the range of 190 to 220 °C.

The screw speed of the melt mixing device preferably is adjusted to a range from 150 to 800 rotations per minute (rpm), preferably 200 to 500 and most preferably 200 to 400 rotations per minute (rpm).

In a further aspect, the temperature of the polymer strand directly before entering the die is preferably in the range of 200 to 215 °C, more preferably 202 to 210 °C and most preferably 204 to 209 °C.

The melt pressure preferably is in the range of 20 to 50 bar.

Following the melt-mixing step, the resulting polymer melt may be pelletized either in an underwater pelletizer or after solidification of one or more strands in a water bath in a strand pelletizer.

It should be understood that the addition of the peroxide may be achieved at once in the pre-mixing stage or may be split up in two additions during said pre-mixing stage or may particularly preferably be fed directly to the melt mixing device.

### Intermediate heterophasic polypropylene composition

The intermediate heterophasic polypropylene composition preferably has an MFR₂ (230 °C, 2.16 kg) of up to 1.5 g/10 min. More preferably, the intermediate heterophasic polyolefin composition has an MFR₂ (230 °C, 2.16 kg) of 0.1 to 1.5 g/10 min or even more 0.2 to 1.2 g/10 min and most preferably 0.3 to 1.0 g/10min.

The ratio of the melt flow rate of the heterophasic polypropylene composition to the melt flow rate of the intermediate heterophasic polypropylene composition (both MFR₂ (230 °C, 2.16 kg) usually is in the range of 5 to 15, preferably is in the range of 5 to 10, more preferably in the range of 6 to 9.

The XCU fraction of the intermediate heterophasic polypropylene composition is preferably present in an amount of 30 to 70 wt.-%, more preferably 35 to 60 wt.-% and most preferably 40 to 55 wt.-% with respect to the total intermediate heterophasic polypropylene composition.

The XCS fraction of the intermediate heterophasic polypropylene composition is preferably present in an amount of 30 to 70 wt.-%, more preferably 40 to 65 wt.-%, even more preferably 45 to 60 and most preferably 45 to 55 wt.-% with respect to the total intermediate heterophasic polypropylene composition.

The XCU fraction of the intermediate heterophasic polypropylene composition preferably has an intrinsic viscosity determined according to DIN EN ISO 1628-1 and -3 of 150 to 400 ml/g, more preferably 175 to 350 ml/g, even more preferably 200 to 325 ml/g and most preferably 220 to 300 ml/g.

The XCS fraction of the intermediate heterophasic polypropylene composition preferably has an intrinsic viscosity determined according to DIN EN ISO 1628-1 and -3 of 100 to 400 ml/g, more preferably 140 to 375 ml/g, even more preferably 145 to 360 ml/g and most preferably 150 to 350 ml/g.

In a further preferred aspect, the ratio of the intrinsic viscosities determined according to DIN EN ISO 1628-1 and -3 of the XCU versus the XCS fraction of the intermediate heterophasic polypropylene composition preferably are in the range of 0.70 to 1.10.

The XCU fraction of the intermediate heterophasic polypropylene composition preferably has an MFR (230°C, 2.16kg, ISO 1133) in the range of 0.5 to 4.0 g/10min.

The XCU fraction of the intermediate heterophasic polypropylene composition preferably has a comonomer content in the range of 0.5 to 5.0, more preferably 0.5 to 4.0, and most preferably 0.5 to 3.5 wt.-%.

The XCS fraction of the intermediate heterophasic polypropylene composition preferably has a comonomer content in the range of 15 to 35 wt.-%, and more preferably 20 to 35 wt.-%.

The comonomer content of the intermediate heterophasic polypropylene composition according to the present invention preferably is 10 wt.-% or higher, more preferably is in the range of 10 to 30 wt.-%, even more preferably is in the range of 12 to 28 wt.-%, and most preferably in the range of 15 to 25 wt.-%.

The present invention is further concerned with an article comprising the heterophasic propylene polymer composition according to the present invention. The article preferably is a health care or medical device such as syringes, catheters, needle hubs, needle protectors, inhalers, filter housings, blood collection system. In other embodiments the article according to the present is a packaging article such as bottles, caps&closures, houseware and the like.

The present invention is further concerned with film comprising the heterophasic propylene polymer composition according to the present invention, whereby the film may be a blown film, BOPP film or cast film.

In yet a further aspect, the present invention is concerned with the use of the heterophasic propylene polymer composition for pharmaceutical packaging such as for fluid bags, pouches, bottles, vials, ampoules, secondary packaging including also parts of the total device that is not in direct contact with the packed drug or fluid. The present invention insofar is also concerned with flexible packaging such as blown film, BOPP film or cast film.

### General Process

The intermediate heterophasic polypropylene composition and insofar also the heterophasic polypropylene composition according to this invention is produced preferably in a multi-stage process in a multi-stage reaction sequence. The bulk polymerisation is preferably performed in a so-called loop reactor. Optionally, the process may also comprise a prepolymerisation step in a manner known in the field and which may precede the first polymerisation step. The process is preferably a continuous process.

It is preferred that the propylene polymer matrix (A) is produced in a bulk reactor and optionally one or more gas phase reactors and afterwards transferred to a gas phase reactor in which the elastomeric copolymer phase (B) is produced in the presence of component (A).

According to the present invention the rubber phase, preferably the ethylene/alpha olefin rubber is prepared as a reactor blend together with the propylene homo- and/or copolymer. For example the production of the propylene homo- and/or copolymer can be effected in a loop reactor and optionally a gas phase reactor, followed by transferring the product into one or more gas phase reactors, where the ethylene/alpha olefin rubber is polymerised.

A suitable catalyst for the polymerisation of the heterophasic propylene polymer composition is any stereospecific catalyst for propylene polymerisation which is capable of polymerising and copolymerising propylene and comonomers at a temperature of 40 to 110 °C and at a pressure from 10 to 100 bar. Ziegler-Natta catalysts (especially a high yield Ziegler-Natta system containing Ti, Cl, Mg and Al) are suitable catalysts.

The catalyst for producing the unmodified intermediate heterophasic propylene polymer composition may be a Ziegler-Natta catalyst. If a Ziegler-Natta catalyst is used it may be e.g. an inorganic halide (e.g. MgCl₂) supported titanium catalyst, together with an aluminium alkyl (e.g. triethylaluminium) cocatalyst. Silanes, e.g. dicyclopentyldimethoxysilane (DCPDMS), cyclohexylmethyl-dimethoxysilane (CHMDMS) or diethylaminotriethoxysilane, may be used as external donors. Such catalyst systems are described in EP 0 491 566 A1 or in EP 0 591 224 A1. A preferred Ziegler Natta catalyst is of the type BCF20P (proprietary specification of Borealis AG) with diethylaminotriethoxysilane (donor U) or dicyclopentyldimethoxysilane (donor D) as external donor, an Al/Ti ratio (mol/mol) of 200 and an Al/donor ratio (mol/mol) of 20 or less.

The catalyst may also be a single-site catalyst (SSC), preferably an asymmetric catalyst comprising an organo-metallic compound of a transition metal of group 3 to 10 or the periodic table (IUPAC) or of an actinide or lanthanide. Such a catalyst system is described in EP 10 009 009.1, which is incorporated herein by reference with respect to the description of the catalyst used for polymerising the polypropylene. The catalyst system may further comprise an activator as a cocatalyst, as described in WO 03/051934, which is incorporated herein by reference.

A preferred catalyst system for preparing the heterophasic polypropylene composition of the present invention will be described in detail below.

Preferably, the heterophasic polymer composition is prepared by reactor blending in a multistep process comprising at least one loop reactor and at least one gas phase reactor. A preferred multistage process is a "loop-gas phase"-process, such as developed by Borealis A/S, Denmark (known as BORSTAR® technology) described e.g. in patent literature, such as in EP 0 887 379, WO 92/12182 WO 2004/000899, WO 2004/111095, WO 99/24478, WO 99/24479 or in WO 00/68315. A further suitable slurry-gas phase process is the Spheripol® process of Basell.

Preferably, a dispersion of the elastomeric phase within the matrix polymer is produced by performing a further polymerization stage in the presence of particles of matrix polymer, e.g. as a further polymerization stage of a multistage polymerization. Preferably the combination of the matrix and elastomeric copolymer is produced in a multiple stage polymerization using two or more polymerization reactors, more preferably using bulk and gas phase reactors (especially fluidized bed gas phase reactors), and especially preferably using a loop reactor followed by one or more, preferably two or three gas phase reactors. In such a procedure, the catalyst system used may be varied between stages but is preferably the same for all stages. Especially preferably, a prepolymerized heterogeneous catalyst is used.

Preferably the heterophasic polyolefin composition according to the present invention is obtained by a multistage polymerization process, as described above, in the presence of a catalyst system comprising as component (i) a Ziegler-Natta procatalyst which contains a transesterification product of a lower alcohol and a phthalic ester.

The procatalyst used according to the invention is preferably prepared by
a) reacting a spray crystallized or emulsion solidified adduct of MgCl₂ and a C₁-C₂ alcohol with TiCl₄
b) reacting the product of stage a) with a dialkylphthalate of formula (I) 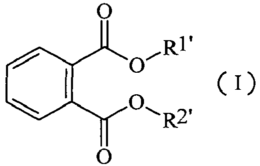 wherein R1' and R2' are independently at least a C₅ alkyl
   under conditions where a transesterification between said C₁ to C₂ alcohol and said dialkylphthalate of formula (I) takes place to form the internal donor
c) washing the product of stage b) or
d) optionally reacting the product of step c) with additional TiCl₄.

The procatalyst is produced as defined for example in the patent applications WO 87/07620, WO 92/19653, WO 92/19658 and EP 0 491 566. The content of these documents is herein included by reference.

First an adduct of MgCl₂ and a C₁-C₂ alcohol of the formula MgCl₂*nROH, wherein R is methyl or ethyl and n is 1 to 6, is formed. Ethanol is preferably used as alcohol. The adduct, which is first melted and then spray crystallized or emulsion solidified, is used as catalyst carrier.

In the next step the spray crystallized or emulsion solidified adduct of the formula MgCl₂*nROH, wherein R is methyl or ethyl, preferably ethyl and n is 1 to 6, is contacted with TiCl₄ to form a titanized carrier, followed by the steps of
- adding to said titanised carrier
   (i) a dialkylphthalate of formula (I) with R1' and R2' being independently at least a C₅-alkyl, like at least a C₈-alkyl,
      or preferably
   (ii) a dialkylphthalate of formula (I) with R1' and R2' being the same and being at least a C₅-alkyl, like at least a C₈-alkyl,
      or more preferably
   (iii) a dialkylphthalate of formula (I) selected from the group consisting of propylhexylphthalate (PrHP), dioctylphthalate (DOP), di-iso-decylphthalate (DIDP), and ditridecylphthalate (DTDP), yet more preferably the dialkylphthalate of formula (I) is a dioctylphthalate (DOP), like di-iso-octylphthalate or diethylhexylphthalate, in particular diethylhexylphthalate,
      to form a first product,
- subjecting said first product to suitable transesterification conditions, i.e. to a temperature above 100 °C, preferably between 100 to 150 °C, more preferably between 130 to 150 °C, such that said methanol or ethanol is transesterified with said ester groups of said dialkylphthalate of formula (I) to form preferably at least 80 mol-%, more preferably 90 mol-%, most preferably 95 mol.-%, of a dialkylphthalate of formula (II) 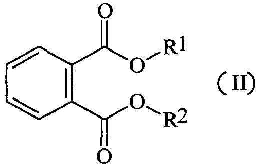 with R¹ and R² being methyl or ethyl, preferably ethyl,
   the dialkylphthalate of formula (II) being the internal donor and
- recovering said transesterification product as the procatalyst composition (component (i)).

The adduct of the formula MgCl₂*nROH, wherein R is methyl or ethyl and n is 1 to 6, is in a preferred embodiment melted and then the melt is preferably injected by a gas into a cooled solvent or a cooled gas, whereby the adduct is crystallized into a morphologically advantageous form, as for example described in WO 87/07620.

This crystallized adduct is preferably used as the catalyst carrier and reacted to the procatalyst useful in the present invention as described in WO 92/19658 and WO 92/19653.

As the catalyst residue is removed by extracting, an adduct of the titanised carrier and the internal donor is obtained, in which the group deriving from the ester alcohol has changed. In case sufficient titanium remains on the carrier, it will act as an active element of the procatalyst. Otherwise the titanization is repeated after the above treatment in order to ensure a sufficient titanium concentration and thus activity.

Preferably the procatalyst used according to the invention contains not more than 2.5 wt.-% of titanium, preferably not more than 2.2% wt.-% and more preferably not more than 2.0 wt.-%. Its donor content is preferably between 4 to 12 wt.-% and more preferably between 6 and 10 wt.-%.

More preferably the procatalyst used according to the invention has been produced by using ethanol as the alcohol and dioctylphthalate (DOP) as dialkylphthalate of formula (I), yielding diethyl phthalate (DEP) as the internal donor compound.

Still more preferably the catalyst used according to the invention is the BCF20P catalyst of Borealis (prepared according to WO 92/19653 as disclosed in WO 99/24479; especially with the use of dioctylphthalate as dialkylphthalate of formula (I) according to WO 92/19658) or the catalyst Polytrack® 8502, commercially available from W.R. Grace, Columbia MA, USA.

For the production of the heterophasic polyolefin composition according to the invention the catalyst system used preferably comprises in addition to the special Ziegler-Natta procatalyst an organometallic cocatalyst as component (ii).

Accordingly it is preferred to select the cocatalyst from the group consisting of trialkylaluminum, like triethylaluminum (TEA), dialkyl aluminum chloride and alkyl aluminumsesquichloride.

Component (iii) of the catalysts system used is an external donor represented by formula (IIIa) or (IIIb). Formula (IIIa) is defined by

Si(OCH₃)₂(R⁵)₂ (IIIa)

wherein R⁵ represents a branched-alkyl group having 3 to 12 carbon atoms, preferably a branched-alkyl group having 3 to 6 carbon atoms, or a cyclo-alkyl having 4 to 12 carbon atoms, preferably a cyclo-alkyl having 5 to 8 carbon atoms.

It is in particular preferred that R⁵ is selected from the group consisting of iso-propyl, iso-butyl, iso-pentyl, tert.-butyl, tert.-amyl, neopentyl, cyclopentyl, cyclohexyl, methylcyclopentyl and cycloheptyl.

Formula (IIIb) is defined by

Si(OCH₂CH₃)₃(NRₓR_{y}) (IIIb)

wherein Rₓ and R_{y} can be the same or different a represent a hydrocarbon group having 1 to 12 carbon atoms.

Rₓ and R_{y} are independently selected from the group consisting of linear aliphatic hydrocarbon group having 1 to 12 carbon atoms, branched aliphatic hydrocarbon group having 1 to 12 carbon atoms and cyclic aliphatic hydrocarbon group having 1 to 12 carbon atoms. It is in particular preferred that Rₓ and R_{y} are independently selected from the group consisting of methyl, ethyl, n-propyl, n-butyl, octyl, decanyl, iso-propyl, iso-butyl, iso-pentyl, tert.-butyl, tert.-amyl, neopentyl, cyclopentyl, cyclohexyl, methylcyclopentyl and cycloheptyl.

More preferably both Rₓ and R_{y} are the same, yet more preferably both Rₓ and R_{y} are an ethyl group.

More preferably the external donor of formula (IIIb) is diethylaminotriethoxysilane .

Most preferably the external donor is of formula (IIIa), like dicyclopentyl dimethoxy silane [Si(OCH₃)₂(cyclo-pentyl)₂] or diisopropyl dimethoxy silane [Si(OCH₃)₂(CH(CH₃)₂)₂].

The present invention also pertains to a heterophasic polypropylene composition obtainable according to the process as described above.

### Examples

### 1. Methods

### a) Melt Flow Rate

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The MFR₂ of polypropylene is determined at a temperature of 230 °C and a load of 2.16 kg. It is also designated in this application as "MFR₂"

### b) Hexane extractable content

Hexane extractables were determined according to the following procedure. 1 g of the sample was put into a 300 ml Erlenmeyer flask and 100 ml of hexane was added. The mixture was boiled under stirring in a reflux condenser for 4 hours. The hot solution was filtered through a folded filter paper and dried (in a vacuum oven at 90 °C) and weighted (0.0001 g exactly) in a round shenk. The Erlenmeyer flask and the filter were washed with n-hexane. Then the hexane was evaporated under a nitrogen stream on a rotary evaporator. The round shenk was dried in a vacuum oven at 90°C over night and was put into a desiccator for at least 2 hours to cool down. The shenk was weighted again and the hexane soluble was calculated therefrom.

### c) Intrinsic viscosity

The intrinsic viscosity (IV) value increases with the molecular weight of a polymer. The intrinsic viscosity of the XCU (p-xylene cold insoluble fraction) and the XCS (p-xylene cold soluble fraction) is measured in decalin at 135°C according to DIN EN ISO 1628-1 and -3.

### d) p-xylene cold soluble fraction

The p-xylene cold soluble fraction (XCS) of the tested polymer compositions was determined according to ISO 6427 at 23 °C.

The fraction insoluble in p-xylene at 23°C (XCU) is then equal to 100% - XCS%.

### e) Comonomer content by FTIR spectroscopy

The comonomer content is determined by quantitative Fourier transform infrared spectroscopy (FTIR) after basic assignment calibrated via quantitative ¹³C nuclear magnetic resonance (NMR) spectroscopy in a manner well known in the art. Thin films are pressed to a thickness of between 100-500 µm and spectra recorded in transmission mode.

Specifically, the ethylene content of a polypropylene-co-ethylene copolymer is determined using the baseline corrected peak area of the quantitative bands found at 720-722 and 730-733 cm⁻¹. Specifically, the butene or hexene content of a polyethylene copolymer is determined using the baseline corrected peak area of the quantitative bands found at 1377-1379 cm⁻¹. Quantitative results are obtained based upon reference to the film thickness.

### f) Flexural modulus

The flexural modulus was determined according to ISO 178 at a test speed of 2mm/min and a force of 100N, whereby the length of the span between the supports was 64 mm, on test specimens having a dimension of 80x10x4.0 mm³ (length x width x thickness) prepared by injection moulding according to EN ISO 1873-2.

### g) Melting Temperature

Melting temperature (Tₘ) was measured with a Mettler TA820 differential scanning calorimetry (DSC) apparatus on 5 to 10 mg samples. DSC was performed according to ISO 3146 (part 3, method C2) in a heat/cool/heat cycle with a scan rate of 10 °C/min in the temperature range of +23 to +210 °C. Melting temperature was determined from the second heating step.

### 2. Compositions:

In a first stage two intermediate heterophasic polypropylene compositions were prepared in a pilot plant.

Details are given in Table 1.

**Table 1:**

| | **Intermediate 1** | **Intermediate 2** |
|---|---|---|
| **MFR (230°C, 2.16 kg)** | 0.56 | 0.56 |
| **MFR (230°C, 2.16 kg) XCU** | 2.0 | 2.0 |
| **XCU (wt.-%)** | 49.2 | 47.6 |
| **XCS (wt.-%)** | 50.8 | 52.4 |
| **IV (XCU) ml/g** | 246 | 272 |
| **IV (XCS) ml/g** | 348 | 352 |
| **IV (XCU)/IV(XCS)** | 0.71 | 0.77 |
| **Comonomer content (XCU) (wt.-%)** | 3.2 | 3.3 |
| **Comonomer content (XCS) (wt.-%) (EPR)** | 31.1 | 34.8 |
| **Total comonomer content (wt.-%)** | 17.4 | 19.8 |
| **Flexural modulus MPa** | 265 | 176 |
| **Hexane extractable content wt.-%** | 14.1 | 14.7 |

Intermediate 1 was subjected to melt mixing in the presence of 2.5-dimethyl-2,5-di-(tert-butylperoxy)-hexane (for comparison) and tert-butylperoxy-isopropyl-carbonate (inventive, different concentrations) to form heterophasic compositions RE1 as well as IE 1a and IE 1b. Process conditions are shown in Table 2.

Intermediate 2 was subjected to melt mixing in the presence of 2.5-dimethyl-2,5-di-(tert-butylperoxy)-hexane (for comparison) and tert-butylperoxy-isopropyl-carbonate (inventive, different concentrations) to form heterophasic compositions RE2 as well as IE 2a and IE 2b. Process conditions are shown in Table 3.

**Table 2:**

| | **RE1** | **IE1a** | **IE1b** |
|---|---|---|---|
| **Starting material** | Intermediate 1 | Intermediate 1 | Intermediate 1 |
| **Effective peroxide concentration* Wt.-% (versus starting material)** | 0.02 | 0.17* | 0.34* |
| **MFR (230°C, 2.16 kg)** | 3.2 | 3.1 | 4.1 |
| **T1 (feed zone) °C** | 190 | 190 | 190 |
| **T2(kneading zone) °C** | 220-230 | 220-230 | 220-230 |
| **T3(die zone)** | 210 | 210 | 210 |
| **Screw speed** | 300 | 300 | 300 |

| | | | |
|---|---|---|---|
| *tert-butylperoxy-isopropyl-carbonate was used as a masterbatch containing 37.5% polypropylene (supplier Pergans). The effective peroxide concentration is the amount of peroxide only. | | | |

**Table 3:**

| | **RE2** | **IE2a** | **IE2b** |
|---|---|---|---|
| **Starting material** | Intermediate 2 | Intermediate 2 | Intermediate 2 |
| **Effective peroxide concentration Wt.-% (versus starting material)** | 0.02 | 0.25* | 0.34* |
| **MFR (230°C, 2.16 kg)** | 3.4 | 3.7 | 5.1 |
| **T1 (feed zone) °C** | 190 | 190 | 190 |
| **T2(kneading zone) °C** | 220-230 | 220-230 | 220-230 |
| **T3(die zone)** | 210 | 210 | 210 |
| **Screw speed** | 300 | 300 | 300 |

| | | | |
|---|---|---|---|
| *tert-butylperoxy-isopropyl-carbonate was used as a masterbatch containing 37.5% polypropylene (supplier Pergans). The effective peroxide concentration is the amount of peroxide only. | | | |

Table 4 shows the properties obtained for RE1,IE1 and IE2.

**Table 4**

| | **RE1** | **IE1a** | **IE1b** |
|---|---|---|---|
| **MFR (230°C, 2.16 kg)** | 3.2 | 3.1 | 4.1 |
| **Hexane extractable content wt.-%** | 28.9 | 19.3 | 21.2 |
| **Flexural modulus MPa** | 249 | 214 | 247 |
| **IV (XCU) ml/g** | 212 | 181 | 148 |
| **IV (XCS) ml/g** • **Hexane extractable content wt.-%** | 6676 | 4516 | 3731 |
| **(IV (XCU) ml/g • Hexane extractable content wt.-%)/MFR(230°C;2.16kg)** | 1915 | 1127 | 765 |
| **Hexane extractable content wt.-%)/MFR (230°C, 2.16kg)** | 9.0 | 6.2 | 5.2 |
| **XCU wt.%** | 49.9 | 51.5 | 54.3 |
| **XCS wt.-%** | 50.1 | 48.5 | 45.7 |
| **IV (XCS) ml/g** | 231 | 234 | 176 |
| **IV(XCU)/IV(XCS)** | 0.92 | 0.77 | 0.84 |

**Table 5 shows the properties obtained for RE2, IE2a and IE2b.**

| | **RE2** | **IE2a** | **IE2b** |
|---|---|---|---|
| **MFR (230°C, 2.16 kg)** | 3.4 | 3.7 | 5.1 |
| **Hexane extractable content wt.-%** | 34.9 | 23.8 | 21.6 |
| **Flexural modulus MPa** | 211 | 143 | 140 |
| **IV (XCU) ml/g** | 236 | 165 | 143 |
| **IV (XCS) ml/g** • **Hexane extractable content wt.-%** | 7957 | 4617 | 3672 |
| **(IV (XCU) ml/g • Hexane extractable content wt.-%)/MFR(230°C;2.16kg)** | 2422 | 1061 | 606 |
| **Hexane extractable content wt.-%)/MFR (230°C, 2.16kg)** | 10.3 | 6.4 | 4.2 |
| **XCU wt.%** | 49.5 | 50.8 | 50.7 |
| **XCS wt.-%** | 50.5 | 49.2 | 49.3 |
| **IV (XCS) ml/g** | 228 | 194 | 170 |
| **IV(XCU)/IV(XCS)** | 1.04 | 0.85 | 0.84 |

## Claims

1. Heterophasic polypropylene composition having an MFR (2.16 kg, 230 °C) of at least 2.5 g/10min and up to 7.0 g/10min, determined according to ISO 1133, including a propylene random copolymer matrix phase (A), and an ethylene-propylene copolymer rubber phase (B) dispersed within the matrix phase,
wherein the heterophasic polypropylene composition has a fraction soluble in p-xylene at 23 °C (XCS fraction), and a fraction insoluble in p-xylene at 23 °C (XCU fraction),
said heterophasic polypropylene composition having a ratio hexane extractables content/MFR₂ of below 8 wt.-%/(g/10min), the hexane extractables being determined by boiling in hexane (1 g in 100 ml hexane, 4h reflux) and the MFR being determined according to ISO 1133 (2.16 kg, 230 °C),
whereby the ratio of the intrinsic viscosities determined according to DIN EN ISO 1628-1 and 3 of the XCU versus the XCS fraction IV(XCU)/IV(XCS) is in the range of 0.75 to 0.90
and
said heterophasic polypropylene composition having a flexural modulus of below 450 MPa determined according to ISO 178 at a test speed of 2mm/min and a force of 100N (length of the span between the supports was 64 mm) on test specimens having a dimension of 80x10x4.0 mm³ (length x width x thickness) prepared by injection moulding according to EN ISO 1873-2.

2. Heterophasic polypropylene composition according to claim 1, wherein the intrinsic viscosity determined according to DIN EN ISO 1628-1 and -3 of the XCS fraction is below 275 ml/g.

3. Heterophasic polypropylene composition according to claim 1 or 2, wherein the ratio of the intrinsic viscosities determined according to DIN EN ISO 1628-1 and -3 of the XCU versus the XCS fraction is in the range of 0.80 to 0.90.

4. Heterophasic polypropylene composition according to any of the preceding claims, wherein the product of the intrinsic viscosities determined according to DIN EN ISO 1628-1 and -3 of the XCS fraction in ml/g and the hexane extractables being determined by boiling in hexane (1 g in 100 ml hexane, 4h reflux, wt.-%) is lower than 4700 (ml/g•wt.-%).

5. Heterophasic polypropylene composition according to any of the preceding claims, wherein the XCU fraction is present in an amount of 35 to 60 wt.-% with respect to the total heterophasic polypropylene composition.

6. Heterophasic polypropylene composition according to any of the preceding claims, wherein the amount of units derived from comonomers selected from ethylene, and/or C₄ to C₁₂ alpha olefins in the fraction insoluble in xylene (XCU fraction) is 1.0 to 4.0 wt.-% with respect to the total weight of the fraction being insoluble in p-xylene (XCU fraction).

7. Heterophasic polypropylene composition according to any of the preceding claims, wherein the amount of units derived from propylene in the fraction soluble in xylene (XCS fraction) is 60 to 85 wt.-% with respect to the total weight of the fraction being insoluble in p-xylene (XCU fraction).

8. Heterophasic polypropylene composition according to claim 1 obtainable by
a) providing an unmodified heterophasic polypropylene composition having an MFR (2.16 kg, 230 °C) of 0.1 to below 1.5 g/10min, determined according to ISO 1133, including a propylene random copolymer matrix phase (A), and an ethylene-propylene copolymer rubber phase (B) dispersed within the matrix phase
b) melt mixing the unmodified heterophasic polypropylene composition with a peroxide having a one hour half life time temperature of 100 to 125 °C in an amount of 0.1 to 0.8 wt.-% with respect to the total composition.

9. Heterophasic polypropylene composition according to claim 8, wherein the peroxide is mixed as a polypropylene masterbatch, preferably at a barrel temperature of 200 to 260°C.

10. Article comprising the heterophasic propylene polymer composition according to any of claims 1 to 9.

11. Film comprising the heterophasic propylene polymer composition according to any of claims 1 to 9.

12. Use of the heterophasic propylene polymer composition as defined in any of claims 1 to 9 for injection moulding, blown film extrusion, cast film extrusion, and injection stretch blow molding.

## Patentansprüche

1. Heterophasische Polypropylenzusammensetzung, die einen MFR (2,16 kg, 230 °C) von mindestens 2,5 g/10 min und bis zu 7,0 g/10 min aufweist, bestimmt gemäß ISO 1133, umfassend eine Propylen-Random-Copolymermatrixphase (A) und eine Ethylen-Propylen-Copolymer- kautschukphase (B), die in der Matrixphase dispergiert ist,
wobei die heterophasische Polypropylenzusammensetzung eine in p-Xylol bei 23 °C lösliche Fraktion (XCS-Fraktion) und eine in p-Xylol bei 23 °C unlösliche Fraktion (XCU-Fraktion) aufweist,
wobei die heterophasische Polypropylenzusammensetzung ein Verhältnis von hexanextrahierbarem Gehalt/MFR₂ von unter 8 Gew.-%/(g/10 min) aufweist, wobei die hexanextrahierbaren Bestandteile durch Kochen in Hexan bestimmt werden (1 g in 100 ml Hexan, 4 h Reflux) und der MFR gemäß ISO 1133 (2,16 kg, 230 °C) bestimmt wird,
wobei das Verhältnis von den intrinsischen Viskositäten, bestimmt gemäß DIN EN ISO 1628-1 und 3, der XCU- versus der XCS-Fraktion IV(XCU)/IV(XCS) in dem Bereich von 0,75 bis 0,90 liegt
und
wobei die heterophasische Polypropylenzusammensetzung einen Biegemodul von unter 450 MPa aufweist, bestimmt gemäß ISO 178 bei einer Testgeschwindigkeit von 2 mm/min und einer Kraft von 100 N (die Länge der Spannweite zwischen den Trägern betrug 64 mm) an Testproben, die eine Abmessung von 80 x 10 x 4,0 mm³ (Länge x Breite x Dicke) aufwiesen und durch Spritzgießen gemäß EN ISO 1873-2 hergestellt wurden.

2. Heterophasische Polypropylenzusammensetzung nach Anspruch 1, wobei die intrinsische Viskosität, bestimmt gemäß DIN EN ISO 1628-1 und -3, von der XCS-Fraktion unter 275 ml/g liegt.

3. Heterophasische Polypropylenzusammensetzung nach Anspruch 1 oder 2,
wobei das Verhältnis von den intrinsischen Viskositäten, bestimmt gemäß DIN EN ISO 1628-1 und -3, der XCU- versus der XCS-Fraktion in dem Bereich von 0,80 bis 0,90 liegt.

4. Heterophasische Polypropylenzusammensetzung nach einem der vorhergehenden Ansprüche, wobei das Produkt aus den intrinsischen Viskositäten, bestimmt gemäß DIN EN ISO 1628-1 und -3, der XCS-Fraktion in ml/g und den hexanextrahierbaren Bestandteilen, bestimmt durch Kochen in Hexan (1 g in 100 ml Hexan, 4 h Reflux, Gew.-%), kleiner als 4700 (ml/g·Gew.-%) ist.

5. Heterophasische Polypropylenzusammensetzung nach einem der vorhergehenden Ansprüche, wobei die XCU-Fraktion mit einer Menge von 35 bis 60 Gew.-% in Bezug auf die gesamte heterophasische Polypropylen- zusammensetzung vorliegt.

6. Heterophasische Polypropylenzusammensetzung nach einem der vorhergehenden Ansprüche, wobei die Menge an Einheiten, die von Comonomeren, ausgewählt aus Ethylen und/oder C₄ bis C₁₂ alpha-Olefinen, stammen, in der in Xylol unlöslichen Fraktion (XCU-Fraktion) 1,0 bis 4,0 Gew.-% in Bezug auf das Gesamtgewicht der Fraktion, die in p-Xylol unlöslich ist (XCU-Fraktion), beträgt.

7. Heterophasische Polypropylenzusammensetzung nach einem der vorhergehenden Ansprüche, wobei die Menge an Einheiten, die von Propylen stammen, in der in Xylol löslichen Fraktion (XCS-Fraktion) 60 bis 85 Gew.-% in Bezug auf das Gesamtgewicht der Fraktion, die in p-Xylol unlöslich ist (XCU-Fraktion), beträgt.

8. Heterophasische Polypropylenzusammensetzung nach Anspruch 1, erhältlich durch
a) Bereitstellen von einer unmodifizierten, heterophasischen Polypropylenzusammensetzung, die einen MFR (2,16 kg, 230 °C) von 0,1 bis unter 1,5 g/10 min aufweist, bestimmt gemäß ISO 1133, umfassend eine Propylen-Random-Copolymermatrixphase (A) und eine Ethylen-Propylen-Copolymerkautschukphase (B), die in der Matrixphase dispergiert ist,
b) Schmelzmischen von der unmodifizierten, heterophasischen Polypropylenzusammensetzung mit einem Peroxid, das eine Halbstunden-Halbwertszeittemperatur von 100 bis 125 °C aufweist, in einer Menge von 0,1 bis 0,8 Gew.-% in Bezug auf die Gesamtzusammensetzung.

9. Heterophasische Polypropylenzusammensetzung nach Anspruch 8, wobei das Peroxid als ein Polypropylenmasterbatch beigemischt wird, vorzugsweise bei einer Zylindertemperatur von 200 bis 260 °C.

10. Artikel, umfassend die heterophasische Propylenpolymerzusammensetzung nach einem der Ansprüche 1 bis 9.

11. Folie, umfassend die heterophasische Propylenpolymerzusammensetzung nach einem der Ansprüche 1 bis 9.

12. Verwendung von der heterophasischen Propylenpolymerzusammensetzung nach einem der Ansprüche 1 bis 9 für Spritzguß, Blasfolienextrusion, Gießfolienextrusion und Spritzstreckblasformen.

## Revendications

1. Composition de polypropylène hétérophasique ayant un MFR (2,16 kg, 230 °C) d'au moins 2,5 g/10 min et jusqu'à 7,0 g/10 min, déterminé selon la norme ISO 1133, incluant une phase de matrice de copolymère aléatoire de propylène (A), et une phase de caoutchouc de copolymère d'éthylène-propylène (B) dispersée à l'intérieur de la phase de matrice,
dans laquelle la composition de polypropylène hétérophasique a une fraction soluble dans le p-xylène à 23 °C (fraction XCS), et une fraction insoluble dans le p-xylène à 23 °C (fraction XCU),
ladite composition de polypropylène hétérophasique ayant un rapport teneur en matières extractibles dans l'hexane/MFR₂ inférieur à 8 % en poids/(g/10 min), les matières extractibles dans l'hexane étant déterminées par ébullition dans l'hexane (1 g dans 100 ml d'hexane, reflux pendant 4 h) et le MFR étant déterminé selon la norme ISO 1133 (2,16 kg, 230 °C),
moyennant quoi le rapport des viscosités intrinsèques déterminées selon la norme DIN EN ISO 1628-1 et 3 de la fraction XCU à la fraction XCS IV (XCU)/ IV(XCS) se situe dans la plage de 0,75 à 0,90
et
ladite composition de polypropylène hétérophasique ayant un module d'élasticité en flexion inférieur à 450 MPa déterminé selon la norme ISO 178 à une vitesse d'essai de 2 mm/min et une force de 100 N (la longueur de l'intervalle entre les supports était de 64 mm) sur des éprouvettes ayant une dimension de 80 x 10 x 4,0 mm³ (longueur x largeur x épaisseur) préparées par moulage par injection selon la norme EN ISO 1873-2.

2. Composition de polypropylène hétérophasique selon la revendication 1, dans laquelle la viscosité intrinsèque déterminée selon la norme DIN EN ISO 1628-1 et -3 de la fraction XCS est inférieure à 275 ml/g.

3. Composition de polypropylène hétérophasique selon la revendication 1 ou 2, dans laquelle le rapport des viscosités intrinsèques déterminées selon la norme DIN EN ISO 1628-1 et -3 de la fraction XCU à la fraction XCS se situe dans la plage de 0,80 à 0,90.

4. Composition de polypropylène hétérophasique selon l'une quelconque des revendications précédentes, dans laquelle le produit des viscosités intrinsèques déterminées selon la norme DIN EN ISO 1628-1 et -3 de la fraction XCS en ml/g et des matières extractibles dans l'hexane étant déterminées par ébullition dans l'hexane (1 g dans 100 ml d'hexane, reflux pendant 4 h,% en poids) est inférieur à 4 700 (ml/g·% en poids).

5. Composition de polypropylène hétérophasique selon l'une quelconque des revendications précédentes, dans laquelle la fraction XCU est présente en une quantité de 35 à 60 % en poids par rapport à la composition de polypropylène hétérophasique totale.

6. Composition de polypropylène hétérophasique selon l'une quelconque des revendications précédentes, dans laquelle la quantité d'unités dérivées de comonomères choisis parmi l'éthylène et/ou les alpha-oléfines en C₄ à C₁₂ dans la fraction insoluble dans le xylène (fraction XCU) est de 1,0 à 4,0 % en poids par rapport au poids total de la fraction étant insoluble dans le p-xylène (fraction XCU).

7. Composition de polypropylène hétérophasique selon l'une quelconque des revendications précédentes, dans laquelle la quantité d'unités dérivées de propylène dans la fraction soluble dans le xylène (fraction XCS) est de 60 à 85 % en poids par rapport au poids total de la fraction étant insoluble dans le p-xylène (fraction XCU).

8. Composition de polypropylène hétérophasique selon la revendication 1 pouvant être obtenue par
a) fourniture d'une composition de polypropylène hétérophasique non modifiée ayant un MFR (2,16 kg, 230 °C) de 0,1 à moins de 1,5 g/10 min, déterminé selon la norme ISO 1133, incluant une phase de matrice de copolymère aléatoire de propylène (A), et une phase de caoutchouc de copolymère d'éthylène-propylène (B) dispersée à l'intérieur de la phase de matrice
b) mélange à l'état fondu de la composition de polypropylène hétérophasique non modifiée avec un peroxyde ayant une température à une durée de demi-vie de une heure de 100 à 125 °C en une quantité de 0,1 à 0,8 % en poids par rapport à la composition totale.

9. Composition de polypropylène hétérophasique selon la revendication 8, dans laquelle le peroxyde est mélangé sous la forme d'un mélange maître de polypropylène, de préférence à une température de cylindre de 200 à 260 °C.

10. Article comprenant la composition de polymère de propylène hétérophasique selon l'une quelconque des revendications 1 à 9.

11. Film comprenant la composition de polymère de propylène hétérophasique selon l'une quelconque des revendications 1 à 9.

12. Utilisation de la composition de polymère de propylène hétérophasique selon l'une quelconque des revendications 1 à 9 pour moulage par injection, extrusion de film soufflé, extrusion de film coulé et moulage par injection-étirage-soufflage.
